# EUROPÄISCHE PATENTSCHRIFT

(11) **EP 2 100 283 B1**
(45) Veröffentlichungstag und Bekanntmachung des Hinweises auf die Patenterteilung: **26.08.2015**
(21) Anmeldenummer: 07821228.9
(22) Anmeldetag: 12.10.2007
(51) Int. Cl.: G08G 1/0968

(54) **ZIELFÜHRUNGSVERFAHREN UND ANORDNUNG ZUR DURCHFÜHRUNG EINES SOLCHEN SOWIE EIN ENTSPRECHENDES COMPUTERPROGRAMM UND EIN ENTSPRECHENDES COMPUTERLESBARES SPEICHERMEDIUM**
NAVIGATION METHOD AND ARRANGEMENT FOR CARRYING OUT SUCH A METHOD AND A CORRESPONDING COMPUTER PROGRAM AND CORRESPONDING COMPUTER-READABLE STORAGE MEDIUM
PROCÉDÉ DE GUIDAGE VERS UNE DESTINATION, SYSTÈME EN VUE DE SON EXÉCUTION, PROGRAMME INFORMATIQUE ET SUPPORT DE MÉMOIRE LISIBLE PAR ORDINATEUR QUI Y CORRESPONDENT

(30) Priorität: 06.12.2006 DE 102006057428
(43) Veröffentlichungstag der Anmeldung: 16.09.2009
(73) Patentinhaber: Robert Bosch GmbH, 70442 Stuttgart (DE)
(72) Erfinder: VOGT, Wilhelm, 33165 Lichtenau (DE); VARCHMIN, Axel, 31180 Giesen (DE); MAI, Kerstin, 31134 Hildesheim (DE)
(86) Internationale Anmeldenummer: PCT/EP2007/060861
(87) Internationale Veröffentlichungsnummer: WO 2008/068090

(56) Entgegenhaltungen:
- EP-A- 0 703 436
- EP-A- 0 978 706
- WO-A-96/24108
- GB-A- 2 323 168
- US-A1- 2005 096 842
- US-A1- 2006 178 807

## Beschreibung

### Technisches Gebiet

Die Erfindung betrifft ein Zielführungsverfahren und eine Anordnung zur Durchführung eines solchen sowie ein entsprechendes Computerprogramm und ein entsprechendes computerlesbares Speichermedium, welche insbesondere einsetzbar sind für eine adaptive Zielführung unter Verwendung eines Fahrzeugnavigationssystems, um die Fahrsicherheit und den Fahrkomfort zu erhöhen.

### Stand der Technik

Es sind bereits Algorithmen zur Schätzung der Verkehrsdichte und zur Stauwarnung bzw. zur Detektion von Störungen im Straßenverkehr bekannt. Diese Algorithmen verarbeiten statische und/oder dynamische Verkehrsdaten, die zum Beispiel über in die Fahrbahn eingelassene Messschleifen oder durch Messungen in Einzelfahrzeugen gewonnen werden. In Einzelfahrzeugen werden beispielsweise Abstandsdaten zu vorausfahrenden oder nachfolgenden Fahrzeugen mit Hilfe von Messeinrichtungen eines intelligenten Abstandsregeltempomaten bzw. eines so genannten ACC-Systems (ACC = Adaptive Cruise Control) ermittelt, oder die Eigengeschwindigkeit des Fahrzeugs wird aufgezeichnet usw. Derartige Algorithmen zur Auswertung der Verkehrssituation werden üblicherweise in Verkehrszentralen verwendet, können aber auch direkt im Bordcomputer eines Fahrzeugs zur Verarbeitung dieser Daten eingesetzt werden. Die Fahrzeug-Fahrzeug-Kommunikation, die zur zeit in der Entwicklung ist, ermöglicht hierbei den Austausch der Daten, die für derartige Berechnungen notwendig sind.

Neben solchen zentralen Systemen zur Erfassung der Verkehrssituation sind beispielsweise aus US 5 291 412 A Fahrzeugnavigationssysteme bekannt, die, in der Regel satellitengestützt, die aktuelle Position des Fahrzeugs mit hoher Genauigkeit bestimmen können. Heutige Fahrzeugnavigationssysteme berechnen die kürzeste, schnellste oder "optimale" (in der Regel eine Mischung dieser beiden Kriterien) Route von der aktuellen Fahrzeugposition zum gewünschten Ziel. Dabei werden aktuelle Verkehrsmeldungen berücksichtigt, so dass Systeme mit entsprechender TMC-Anbindung Staus umfahren können, wenn die Ausweichroute günstiger ist.

Darüber hinaus sind Lösungen bekannt, die als so genannte Spurassistenten bezeichnet werden, welche mit Hilfe von Sensoren das Spurverhalten eines Fahrzeugs überwachen und dem Fahrer mitteilen, wenn das Fahrzeug eine einmal benutzte Fahrspur verlässt. Damit wird verhindert, dass das Fahrzeug ungewollt von der Fahrspur abkommt.

Die bekannten Systeme werden aber bisher lediglich für die Zielführung bzw. Verkehrsüberwachung, nicht aber für eine Bewertung der Sicherheit von geplanten Fahrmanövern eingesetzt. In Fahrzeugkonzepten nimmt das Thema Sicherheit eine immer stärkere Rolle ein. Es geht nicht mehr ausschließlich darum, möglichst schnell an das Ziel geführt zu werden, sondern auch darum, möglichst sicher geführt zu werden.

Dies wird aktuell dadurch gewährleistet, dass Fahrhinweise frühzeitig gegeben werden. Dennoch kann es bei ungünstigen Verkehrsverhältnissen passieren, dass der Fahrer die Anweisungen, zum Beispiel zum Ausfahren von einer Autobahn, nicht rechtzeitig befolgen kann, weil er sich vielleicht auf der äußersten Überholspur befindet und die anderen Spuren, die er kreuzen müsste, relativ voll sind. Das Befolgen der Fahranweisung würde für den Fahrer und die anderen Verkehrsteilnehmer unter Umständen eine Gefährdung bedeuten. Bisher ist es dem Fahrzeugnavigationssystem nicht möglich, eine solche Gefahrensituation zu erkennen. Es wäre also wünschenswert, die bekannten Systeme in dieser Hinsicht zu erweitern.

Aus der EP 0 978 706 A2 ist ein Verfahren bekannt, das für eine Zielführung einen Risikoindex berücksichtigt. Zum Beispiel wird in diesem Zusammenhang eine Kriminalitätsrate genannt, was einem statistischen Risiko entspricht.

In der WO 96/24108 wird eine Navigationsführung beschrieben, die umweltbedingte Verkehrsbedingungen berücksichtigen soll. Dies kann eine Temperatur, bzw. das Wetter, z.B. Regen oder Schnee, sein. Ein Feuchtesensor kann hierfür verwendet werden. Diese Schrift lehrt Verkehrsbedingungen, wie Staus, z.B. mit Messschleifen zu erfassen. Es werden statische Faktoren mit dynamischen Faktoren kombiniert.

### Darstellung der Erfindung Aufgabe, Lösung, Vorteile

Es ist somit Aufgabe der vorliegenden Erfindung, ein Zielführungsverfahren und eine Anordnung zur Durchführung eines solchen sowie ein entsprechendes Computerprogramm und ein entsprechendes computerlesbares Speichermedium bereitzustellen, welche die oben genannten Nachteile vermeiden, und insbesondere die Fahrsicherheit erhöhen.

Diese Aufgabe wird erfindungsgemäß durch die Merkmale in den unabhängigen Ansprüchen gelöst. Zweckmäßige Ausgestaltungen der Erfindung sind in den Unteransprüchen enthalten.

Das erfindungsgemäße Verfahren mit den im Anspruch 1 genannten Merkmalen bietet den Vorteil, dass einem Nutzer des erfindungsgemäßen Zielführungsverfahrens, wie beispielsweise einem Fahrzeugführer Fahrempfehlungen angeboten werden, welche gegenüber alternativen Zielführungen eine hohe Sicherheit beim Zurücklegen des Weges gewährleisten. Dies wird erreicht, indem basierend auf Angaben über Fahrtziel und Ausgangsort mindestens eine Route berechnet wird und Fahrempfehlungen in Abhängigkeit des Risikos berechneter Routen ausgegeben werden. In einer bevorzugten Ausführungsform des erfindungsgemäßen Zielführungsverfahrens werden Routen hinsichtlich eines statischen und/oder dynamischen Risikos bewertet. Vorzugsweise werden dabei statische Risiken bereits bei einer initialen Routenberechnung berücksichtigt, dynamische Risiken fließen dagegen vorzugsweise kurzfristig in eine Routenberechnung ein.

Gemäß dem erfindungsgemäßen Zielführungsverfahrens ist vorgesehen, dass Informationen über die aktuelle Verkehrssituation in der Umgebung des Nutzers des Zielführungsverfahrens ausgewertet werden, insbesondere in der Umgebung des Fahrzeugs. Das Risiko des Bewegungsverhaltens bzw. der sich ergebenden Fahrmanöver wird unter Verwendung der Ergebnisse der Auswertung durch mindestens ein Computerprogramm bewertet, und es werden Fahrempfehlungen in Abhängigkeit der Bewertung ausgegeben. Unter Bewegungsverhalten werden hier unter anderem Fahrmanöver, wie Abbiegen, Spurwechsel oder dergleichen überhaupt alle solche Verhaltensweisen verstanden, die erforderlich sind, um die vorgeschlagene Route zu verfolgen. Vorteilhafterweise wird die Route bewertet, wenn sich auf der aktuell befahrenen Route mehrere Alternativen für den weiteren Streckenverlauf ergeben, wie beispielweise an Kreuzungen oder Autobahnausfahrten. Der Ausgangsort ist dann die jeweilige aktuelle Position des Fahrzeugs.

In einer bevorzugten Ausführungsform eines Zielführungsverfahrens ist vorgesehen, dass Risiken bei der Bewertung einer Route in Abhängigkeit eines Nutzers des Zielführungsverfahrens berücksichtigt werden. So können beispielsweise bei einer Nutzung des Zielführungsverfahrens durch Fußgänger zum Beispiel steile, einsame, glitschige Strecken oder Straßen, Parks oder Plätze bei Nacht mit höherem Risiko bewertet werden, bei einer Nutzung des Zielführungsverfahrens durch Radfahrer könnten Strecken mit Radfahrwegen besonders bewertet werden, bei einer Nutzung des Zielführungsverfahrens durch Fahrzeugführer könnten beispielsweise bestimmte Gebiete, zum Beispiel Stadtzentren während Rushhour, oder bestimmte Routen, wie zum Beispiel Ausfallstraßen nach Feierabend, bei der Routenbewertung besonders berücksichtigt werden.

Vorteilhafterweise wird die Risikobewertung
- für das Befolgen der jeweiligen (Fahrt)Route erforderliche Abbiegevorgänge und/oder
- für das Befolgen der jeweiligen (Fahrt) Route erforderliche Spurwechsel vorgenommen und/oder die Risikobewertung berücksichtigt
- die Verkehrsdichte in der Umgebung eines Verkehrsteilnehmers wie beispielsweise eines Kraftfahrzeugs,
- die Geschwindigkeit eines Kraftfahrzeugs und/oder
- alternative (Fahrt) Routen.

In einer bevorzugten Ausführungsform des erfindungsgemäßen Verfahrens ist vorgesehen, dass das Computer programm mindestens eine Schnittstelle zu einem Navigationssystem, wie beispielsweise einem Fahrzeugnavigationssystem oder einem auf einem Mobiltelefon oder Personal Digital Assistent (PDA) installierten Navigationssystem, aufweist oder dass das Computerprogramm in ein solches Navigationssystem integriert ist, und Fahrempfehlungen durch das Navigationssystem in Abhängigkeit der Risikobewertung ausgegeben werden.

In einer anderen bevorzugten Ausführungsform des erfindungsgemäßen Verfahrens ist vorgesehen, dass die Berechnung von Fahrtrouten eine Bewertung der Fahrtrouten hinsichtlich Fahrtzeit und Fahrtroutenlänge umfasst, die aus den Fahrtrouten resultierenden Fahrmanövern hinsichtlich des Risikos und der Fahrtzeit- und/oder Fahrtroutenlängendifferenz gegenüber alternativen Fahrtrouten bewertet wird. Damit wird erreicht, dass Missverhältnisse zwischen Länge des Umwegs bzw. Fahrtzeitverlängerung durch die sicherere, alternative Fahrtroute und den Sicherheitsgewinn vermieden werden. Ganz analog werden Routen von Fußgängern hinsichtlich der für das Zurücklegen der Route benötigten Zeit und der Routenlänge bewertet. Das aus den Routen resultierende Bewegungsverhalten des Fußgängers wird gleichfalls hinsichtlich des Risikos und der Zeit- und/oder Routenlängendifferenz gegenüber alternativen Routen bewertet.

Der Erhöhung der Fahrtsicherheit dient es auch, wenn in Abhängigkeit der Bewertung von Risiken eines Fahrmanövers der Zeitpunkt der Ausgabe von Fahrhinweisen bestimmt wird. So sollte bei hohem Risiko eines Fahrmanövers die Ausgabe von Fahrhinweisen für eine zeit- und/oder entfernungsoptimale Fahrtroute früher erfolgen, als bei einem niedrigen Risiko. In diesem Falle wird der Fahrhinweis für die optimale Fahrtroute ausgegeben. Es kann aber auch vorgesehen werden, dass bei hohem Risiko eines Fahrmanövers für eine optimale Fahrtroute die Ausgabe von Fahrhinweisen für eine hinsichtlich Fahrtzeit und Fahrtroutenlänge suboptimale Fahrtroute erfolgt. Für Fußgänger sind diese verschiedenen Ausgabezeitpunkte eher nicht so bedeutsam, da ein Fußgänger in der Regel Zeit hat, um seine Entscheidungen über die einzuschlagende Route zu treffen. Er kann sich mit der Zielführung intensiver beschäftigen, so dass eine andere beispielhafte Ausführungsform vorsieht, eine größere Anzahl von Informationen darüber auszugeben, welche Risiken auf welcher Route liegen, so dass der Nutzer selbst entscheiden kann, welcher Weg für ihn angenehmer ist.

In einer weiteren bevorzugten Ausführungsform des erfindungsgemäßen Verfahrens ist vorgesehen, dass Navigationshinweise bzw. Fahrempfehlungen für mehrere alternative (Fahrt)Routen ausgegeben werden. Von Vorteil ist es dabei, wenn die Reihenfolge der Ausgabe der Navigations- bzw. Fahrhinweise durch die Bewertung der jeweiligen (Fahrt)Route bestimmt wird. Darüber hinaus ist in einer anderen bevorzugten Ausführungsform des erfindungsgemäßen Verfahrens vorgesehen, dass zusätzlich Informationen über die voraussichtlich für das Zurücklegen der jeweiligen Route benötigten Zeit und/oder über die Länge von (Fahrt)Routen ausgegeben werden. Dem Nutzer werden in diesem Falle alle wesentlichen Informationen gegeben, welche für eine Beurteilung der Fahrhinweise wichtig sind.

Bei Vorhandensein eines Car2Car-Kommunikationssystems sieht eine andere bevorzugte Ausführungsform des erfindungsgemäßen Verfahrens vor, dass Fahrtrouten durch automatische Abstimmung mit benachbarten Fahrzeugen, die ebenfalls ein Car2Car-Kommunikationssystem besitzen, bestimmt werden, indem das Risiko geringer bewertet wird, da ein kooperatives Fahrverhalten möglich ist.

Navigations- bzw. Fahrhinweise können akustisch und/oder visuell ausgegeben werden. Es erweist sich für Führer eines Fahrzeugs (Kraftfahrzeug, Motorrad, Fahrrad oder dergleichen) als Vorteil, wenn bei visueller Ausgabe die Navigations- bzw. Fahrhinweise in Abhängigkeit der Bewertung in unterschiedlichen Farben und/oder unterschiedlichen Helligkeitsstufen ausgegeben werden, denn dadurch übersieht der Fahrzeugführer mit einem Blick die Fahrsituation.

Eine weitere bevorzugte Ausführungsform des erfindungsgemäßen Verfahrens sieht vor, dass Informationen über die aktuelle Verkehrssituation über
- Radar-,
- Video-Sensoren,
- Fahrzeug-zu-Fahrzeug- (Car2Car-),
- Fahrzeug-Umgebungs-Kommuni-kationssysteme (Car2Infrastructure- Kommunikationssysteme),
- ein TMC-System (TMC = Traffic Message Channel),
- eine Verkehrszentrale und/oder
- eine Verkehrsleiteinrichtung
gewonnen werden. Im Folgenden wird anstelle des Begriffs "Kommunikationssystem" vereinfachend der Begriff "Sensor" verwendet, da dieses System Daten empfängt, die vom Empfänger analog zu Sensordaten betrachtet werden können. Dabei kann die Anbindung des Fahrzeugnavigationssystems an externe Sensoren, wie zum Beispiel Radar-, Video-, Car2Car- und/oder Car2Infrastructure-Sensoren, über ein Bussystem oder eine Luftschnittstelle realisiert werden.

Eine Anordnung nach der Erfindung umfasst mindestens einen Chip und/oder Prozessor, der (die) derart eingerichtet ist (sind), dass ein Zielführungsverfahren ausführbar ist, wobei Fahrempfehlungen in Abhängigkeit des Risikos berechneter Routen ausgegeben werden.

Eine andere Anordnung nach der Erfindung umfasst mindestens einen Chip und/oder Prozessor, der (die) derart eingerichtet ist (sind), dass ein Verfahren zum Führen eines Kraftfahrzeugs ausführbar ist, wobei Informationen über die aktuelle Verkehrssituation in der Umgebung des Fahrzeugs ausgewertet werden, das Risiko der sich aus berechneten Fahrtrouten ergebenden Fahrmanöver unter Verwendung der Ergebnisse der Auswertung durch mindestens ein Computerprogramm bewertet wird und Fahrhinweise in Abhängigkeit der Bewertung ausgegeben werden.

Eine bevorzugte Ausführungsform der erfindungsgemäßen Anordnung sieht vor, dass die Anordnung ein Navigationssystem, insbesondere ein Fahrzeugnavigationssystem, umfasst.

In einer anderen bevorzugten Ausführungsform der erfindungsgemäßen Anordnung ist vorgesehen, dass die Anordnung mindestens einen
- Radar-,
- Video-,
- biometrischen (zur Erfassung des Fahrerverhaltens)
- Fahrzeugumfeld- (Temperatur, Helligkeit, Nässe, etc.)
- Fahrzeug-zu-Fahrzeug- (Car2Car-) und/oder
- Fahrzeug-Umgebungs-Sensor (Car2Infrastructure-Sensor),
umfasst. Fahrzeuge, welche mit derartigen Sensoren ausgestattet sind, können das aktuelle Verkehrsgeschehen beobachten und einschätzen. Es ist in diesen Fällen möglich, dem Fahrzeugnavigationssystem diese Informationen über eine Schnittstelle bereitzustellen. Diese Informationen können dann vom Fahrzeugnavigationssystem dahingehend verwendet werden, dass dem Fahrer eine alternative oder neue Fahranweisung gegeben wird, die für ihn zwar unter Umständen einen kleinen Umweg bedeuten würde, aber weniger Stress und Risiko.

Ein erfindungsgemäßes Computerprogramm ermöglicht es einer Datenverarbeitungseinrichtung, nachdem es in den Speicher der Datenverarbeitungseinrichtung geladen worden ist, ein Zielführungsverfahren durchzuführen, wobei Fahrempfehlungen in Abhängigkeit des Risikos berechneter Routen ausgegeben werden.

Ein anderes erfindungsgemäßes Computerprogramm ermöglicht es einer Datenverarbeitungseinrichtung, nachdem es in den Speicher der Datenverarbeitungseinrichtung geladen worden ist, ein Verfahren zum Führen eines Kraftfahrzeugs durchzuführen, wobei Informationen über die aktuelle Verkehrssituation in der Umgebung des Fahrzeugs ausgewertet werden, das Risiko der sich aus berechneten Fahrtrouten ergebenden Fahrmanöver unter Verwendung der Ergebnisse der Auswertung durch mindestens ein Computerprogramm bewertet wird und Fahrhinweise in Abhängigkeit der Bewertung ausgegeben werden.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 22 aus einem elektronischen Datennetz, wie beispielsweise aus dem Internet, auf eine an das Datennetz angeschlossene Datenverarbeitungseinrichtung heruntergeladen wird.

Um ein Kraftfahrzeug erfindungsgemäß zu führen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Zielführungsverfahren durchzuführen, wobei Fahrempfehlungen in Abhängigkeit des Risikos berechneter Routen ausgegeben werden.

Ein anderes erfindungsgemäßes computerlesbares Speichermedium ist dadurch ausgezeichnet, dass auf ihm ein Programm gespeichert ist, das es einer Datenverarbeitungseinrichtung ermöglicht, nachdem es in den Speicher der Datenverarbeitungseinrichtung geladen worden ist, ein Verfahren zum Führen eines Kraftfahrzeugs durchzuführen, wobei Informationen über die aktuelle Verkehrssituation in der Umgebung des Fahrzeugs ausgewertet werden, das Risiko der sich aus berechneten Fahrtrouten ergebenden Fahrmanöver unter Verwendung der Ergebnisse der Auswertung durch mindestens ein Computerprogramm bewertet wird und Fahrhinweise in Abhängigkeit der Bewertung ausgegeben werden.

Der besondere Vorteil der Erfindung ist die sicherheitsabhängige Fahranweisung. Diese Anweisung kann gegebenenfalls suboptimal hinsichtlich der Entfernung und der Fahrtzeit zum Ziel sein, dafür wird aber das Unfallrisiko reduziert. Das Risiko wird unter Einspeisung von externen Sensorinformationen bewertet und gegenüber dem möglichen Umweg gewichtet, um so ungerechtfertigt weite Umleitungen oder lange Fahrtzeiten zu vermeiden, die zum Sicherheitsgewinn in einem Missverhältnis stehen.

### Kurze Beschreibung der Zeichnung

Nachstehend wird die Erfindung in einem Ausführungsbeispiel anhand der beigefügten Zeichnung näher erläutert. Es zeigen:
Figur 1 eine schematische Darstellung des Zusammenspiels der einzelnen Komponenten einer beispielhaften erfindungsgemäßen Anordnung,
Figur 2 eine Veranschaulichung einer Verkehrssituation, die zu einem suboptimalen Fahrhinweis führt,
Figur 3 beispielhafte Darstellungen für die optische Darstellung der Fahrhinweise, und
Figur 4 tabellarische Darstellung einer möglichen Gruppierung von risikobehafteten Ereignissen für die Routenbewertung.

### Bester Weg zur Ausführung der Erfindung

Im Folgenden soll die Erfindung beispielhaft an verschiedenen Ausführungsbeispielen beschrieben werden.

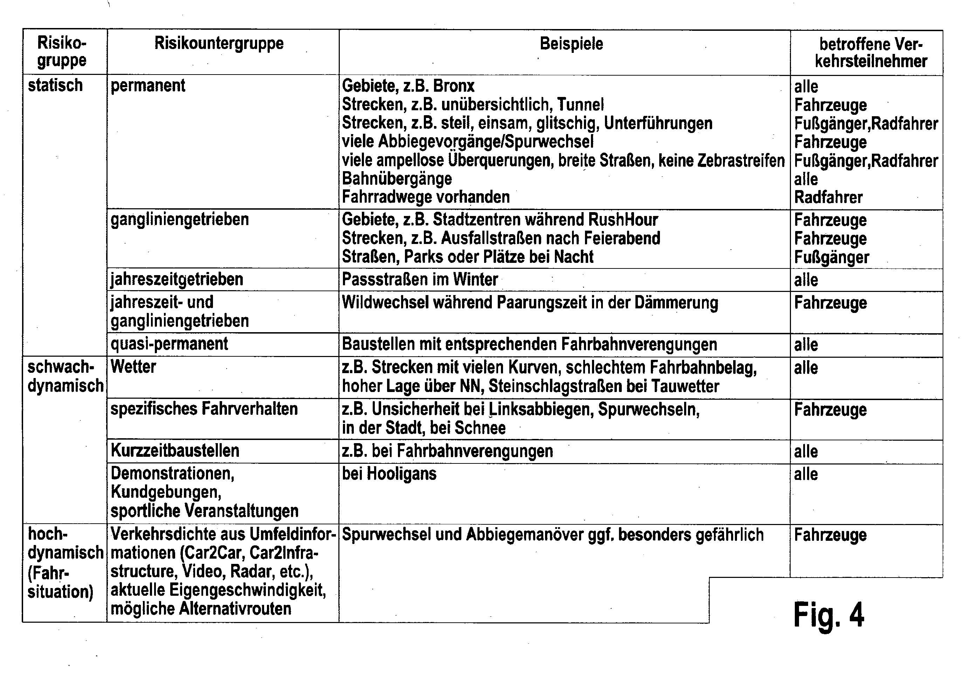

Da bei der Erfindung Streckenempfehlungen in Abhängigkeit von Risiken gegeben werden, sollen einige detailliertere Betrachtungen zu verschiedenen Risikoarten vorangestellt werden (vgl. auch Fig. 4).

In einer beispielhaften Ausführungsform der Erfindung werden Risiken in statische und dynamische Risiken aufgeteilt, wobei dynamische Risiken weiter in schwach-dynamische und hochdynamische unterteilt werden können.

### Statische Risiken:

Statische Risiken können permanent, gangliniengetrieben und/oder jahreszeitgetrieben auftreten.

Ein permanentes Risiko kann beispielsweise für bestimmte Stadtgebiete (zum Beispiel Bronx) oder für bestimmte Strecken angenommen werden. Ein statisches permanentes Risiko einer Strecke kann zum Beispiel angenommen werden, wenn die Strecke unübersichtlich ist, durch einen Tunnel oder eine Unterführung führt, steil, einsam oder glitschig ist.

Es ist hierfür in einer weiteren beispielhaften Ausführungsform vorgesehen, dass ein Nutzer die einzelnen Risiken idealerweise vorab in seiner Systemsteuerung bewerten bzw. gewichten kann. Dies kann dazu führen, dass ein alter Mensch zum Beispiel steile Strecken komplett vermeidet, während ein jüngerer Mensch das Risiko nur auf 10 % setzt. Analog könnten Bewertungen für Unterführungen bei Frauen und Männern unterschiedlich stark sein. Während einzelne Gegebenheiten für alle Nutzer gleichermaßen ein (gegebenenfalls unterschiedlich gewichtetes) Risiko darstellen, beispielsweise würde ein Stadtgebiet wie die Bronx sowohl für Fußgänger, Radfahrer, Inlineskater als auch für Motorrad- oder Autofahrer jederzeit ein gewisses Risiko darstellen, desgleichen stellen bestimmte Gegebenheiten der Route, wie etwa Bahnübergänge für alle Nutzer zu jeder Zeit ein Risiko dar, wären also als ein permanentes Risiko einzustufen. Andere permanente Risiken sind nur für einzelne Nutzer, wie beispielsweise.Motorisierte oder Fußgänger/Radfahrer, relevant. Beispielsweise könnten Strecken mit zahlreichen Abbiegevorgängen oder Spurwechseln für Fahrzeuge 03 mit einem erhöhten Risiko bewertet werden. Demgegenüber wären Strecken mit vorhandenen Fahrradwegen für Radfahrer zu bevorzugen, das heißt mit einem geringeren Risiko zu bewerten als Routen ohne Fahrradwege. Für Radfahrer und Fußgänger wäre zum Beispiel auch die Bewertung von Routenbeschaffenheiten wie unübersichtliche, steile, einsame oder glitschige Route wertvoll, ob die Route Unterführungen aufweist, oder ob viele ampellose Überquerungen notwendig sind bzw. breite Straßen ohne Zebrastreifen bei einer Route überquert werden müssen.

Bestimmte Gebiete oder bestimmte Strecken, zum Beispiel Stadtzentren oder Ausfallstraßen, während der Rushhour, oder Straßen, Parks sowie Plätze bei Nacht wären gangliniengetrieben mit verschieden hohem Risiko zu bewerten. Wobei auch hier die Einschätzung des Risikos für Fahrzeuge 03 in der Regel anders zu bewerten wäre als für Fußgänger bzw. Radfahrer. Für Fahrzeuge 03 wären beispielsweise Gebiete oder Strecken während des Berufsverkehrs mit höherem Risiko zu bewerten, während das Kriterium ,Straße, Park oder Platz bei Nacht' für Fußgänger und Radfahrer von Bedeutung ist.

Statische jahreszeitgetriebene Risiken für alle Verkehrsteilnehmer sind beispielsweise Passstraßen im Winter.

Daneben können auch statische jahreszeit- und gangliniengetriebene Risiken bei der Routenberechnung berücksichtigt werden; dazu zählen zum Beispiel Wildwechsel während der Paarungszeit in der Dämmerung, welcher in einer beispielhaften Ausführungsform der Erfindung insbesondere bei der Routenberechnung für Fahrzeuge 03 berücksichtigt werden.

Als weitere Untergruppe der statischen Risiken werden in einer anderen beispielhaften Ausführungsform der Erfindung statische quasi-permanente Risiken bei der Routenberechnung bzw. -bewertung berücksichtigt. Hierzu zählen zum Beispiel Baustellen mit entsprechenden Fahrbahnverengungen, die für alle Verkehrsteilnehmer als Risiko einzustufen sind.

In einer weiteren beispielhaften Ausführungsform der Erfindung ist eine Risikogruppe ,schwach-dynamisch' vorgesehen. Das Wetter wäre ein solches schwach-dynamisches Risiko, welches gegebenenfalls unterschiedlich gewichtet in die Routenberechnung für alle Verkehrsteilnehmer einfließt, so dass Strecken mit vielen Kurven, schlechtem Fahrbahnbelag, hoher Lage über NN, Steinschlagstraßen bei Tauwetter oder dergleichen bei den entsprechenden Witterungsverhältnissen mit einem entsprechend höheren Risiko bewertet werden.

Andere schwach-dynamische Risiken sind beispielsweise spezifisches Fahrverhalten, Kurzzeitbaustellen oder Demonstrationen, Kundgebungen bzw. sportliche Veranstaltungen, welche zum Beispiel hinsichtlich einer Unsicherheit beim Linksabbiegen, beim Spurwechsel, beim Fahren in der Stadt oder bei Schnee (spezifisches Fahrverhalten), bei Fahrbahnverengungen (Kurzzeitbaustelle) bzw. beim Auftreten von Hooligans (Demonstrationen, Kundgebungen bzw. sportliche Veranstaltungen) entsprechend bewertet werden.

Eine weitere wichtige Risikogruppe für die Bewertung der Routen sind hochdynamische Risiken, welche sich insbesondere aus der aktuellen Fahrsituation von Fahrzeugen 03 ergeben. Berücksichtigt werden dabei zum Beispiel Umfeldinfonnationen des Fahrzeugs 03, die Eigengeschwindigkeit des Fahrzeugs 03 und/oder mögliche Alternativrouten. Die Umfeldinfonnationen des Fahrzeugs 03 werden dabei beispielsweise durch Sensorsysteme wie zum Beispiel Radar-, Video- Car2Car-, Car2Infrastruc-ture-Sensoren oder dergleichen vermittelt. Diese Parameter werden dann bei der Bewertung von Fahnnanövern der vorgesehenen Fahrtroute wie beispielsweise erforderlichem Spurwechsel oder Abbiegemanöver berücksichtigt.

In einer beispielhaften Ausführungsform der Erfindung werden statische und gegebenenfalls schwach-dynamische Einflüsse schon im Vorfeld bei der Routenberechnung berücksichtigt, hochdynamische Einflüsse fließen kurzfristig in die Berechnung ein. In Abhängigkeit der Risikoart können Fahrempfehlungen in unterschiedlicher Art und Weise ausgegeben werden: zum Beispiel könnten bei statischen Risiken Hinweise für die optimale Route frühzeitig geben werden, um den Fahrzeugführer in risikoreichen Situationen nicht durch diese Hinweise abzulenken, bei hochdynamischen Einflüssen könnten in risikoreichen Situationen suboptimale Hinweise gegeben werden, um risikovolle Fahrmanöver zu vermeiden. In risikoarmen Situationen könnte vorgesehen sein, mehrere Alternativhinweise zu geben, wobei die Reihenfolge der Alternativhinweise und/oder Zusatzinformationen zu den Alternativhinweisen dem Nutzer des Navigationssystems auf die mit den jeweiligen Routen verbundenen Vor- und Nachteile hinweisen.

Weil der Fußgänger Zeit hat, sich mit der Zielführung zu beschäftigen, sieht wieder eine andere beispielhaften Ausführungsform vor, zusätzliche Inforniationen darüber auszugeben, welche Risiken auf welcher Route liegen, so dass der Nutzer selbst entscheiden kann, welcher Weg für ihn angenehmer ist.

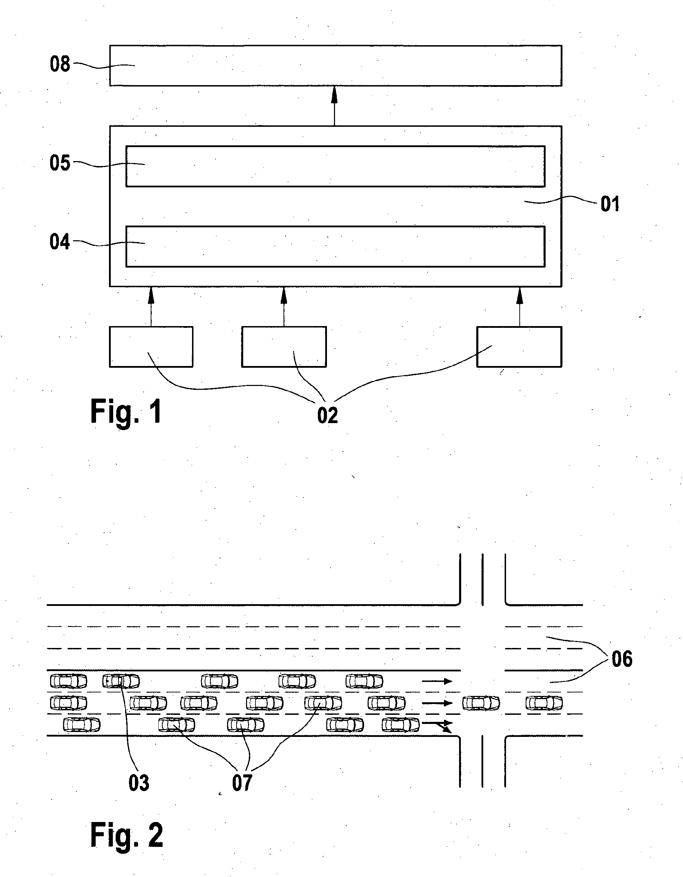

In einer möglichen Ausführungsform kann die Erfindung als Erweiterung eines herkömmlichen Fahrzeugnavigationssystems 01 ausgeführt sein. Das Fahrzeugnavigationssystem 01 hat in einer solchen beispielhaften Ausführung eine Anbindung an externe Sensoren 02, wie zum Beispiel Radar-, Video- Car2Car- und/oder Car2Infrastructure-Sensoren, zum Beispiel über ein Bussystem oder eine Luftschnittstelle. Diese Sensoren 02 liefern Informationen über das aktuelle Verkehrsgeschehen in der Umgebung des Fahrzeugs 03. Mit Hilfe dieser Informationen kann das Fahrzeugnavigationssystem 01 das Risiko bewerten, ein zeit- und entfernungsoptimales Fahrmanöver durchzufiihren, das heißt ein Manöver, das der kürzesten, schnellsten bzw. optimalen Route folgt. Hierfür umfasst in einer beispielhaften Ausführungsform das Fahrzeugnavigationssystem 01 Mittel 04 zur Bewertung des Risikos bei Befolgen des optimalen Fahrhinweises sowie Mittel 05 zur Bestimmung sicherheitsoptimaler Fahranweisungen unter Berücksichtigung eines möglichen Umwegs. Das Mittel 05 zur Bestimmung sicherheitsoptimaler Fahranweisungen gewichtet in einer beispielhaften Ausführungsform das Risiko gegenüber einem möglichen Umweg oder Zeitverlust. Falls dieses Risiko gering ist, zum Beispiel Geradeausfahrt oder Abbiegen auf einer einspurigen Straße, wird der optimale Fahrhinweis ausgegeben. Falls das Risiko allerdings relativ hoch ist, zum Beispiel beim Abbiegen auf einer Straße mit mehreren Fahrspuren 06, wobei Fahrspurwechsel bei hoher Verkehrsdichte erforderlich wären, wird unter Umständen der suboptimale Fahrhinweis ausgegeben. In Figur 2 ist eine solche Situation dargestellt. Das Fahrzeug 03 befindet sich zum aktuellen Zeitpunkt auf der äußersten linken Fahrspur. Der Fahrer müsste nach der optimalen Fahrtroute eigentlich nach rechts abbiegen und dazu aber bei dichtem Verkehr zwei Fahrspurwechsel durchführen. Daher würde hier ein "Geradeaus" empfohlen werden, sofern der sich ergebende Umweg nicht zu groß wird.

In einer solchen Situation können folgende Alternativen vorgesehen sein:
- Der optimale Fahrhinweis wird früher gegeben als üblich, so dass der Fahrer mehr Zeit hat, sich korrekt einzuordnen und das Fahrmanöver sicher und stressfrei auszuführen. Eine mögliche Ausbaustufe dieser Anordnung sieht vor, dem Fahrer explizit mitzuteilen, dass das Befolgen dieses optimalen Fahrhinweises wichtig ist, weil sich sonst automatisch ein Umweg von x km mit entsprechendem Zeitverlust ergeben würde, zum Beispiel, weil innerhalb der nächsten 20 km keine Autobahnausfahrt mehr existiert.
- Es wird ein suboptimaler Fahrhinweis gegeben, zum Beispiel wird dem Fahrer empfohlen, geradeaus weiterzufahren, sich aber rechts zu halten, obwohl er eigentlich die Autobahn hätte verlassen sollen. Der sich dabei ergebende Umweg sollte dann aber in einer vernünftigen Relation zum Risiko stehen, das ein Befolgen des optimalen Fahrhinweises bedeutet hätte. Der Fahrer merkt in diesem Fall möglicherweise gar nicht, dass er die Autobahn eigentlich hätte verlassen sollen und kommt stressfreier zum Ziel, weil er nicht versucht, die Fahranweisung "auf Biegen und Brechen" zu befolgen. An der nächsten Ausfahrt wird er dann zum Ausfahren aufgefordert.

- Es werden mehrere alternative Fahrhinweise gegeben, zum Beispiel wird dem Fahrer empfohlen, geradeaus zu fahren oder rechts abzubiegen. Die Reihenfolge der Anweisungen könnte dabei die Unterscheidung zwischen optimaler und suboptimaler Anweisung ermöglichen. In einer weiteren Ausbaustufe könnten gegebenenfalls noch Entfernungen und/oder Zeiten für die Alternativen ausgegeben werden.
- Eine weitere Variante sieht vor - insbesondere bei Vorliegen eines Car2Cär-Sensors -, dass das eigene Fahrzeug 03 sein Abbiegevorhaben mit den anderen Verkehrsteilnehmern 07 abstimmt, um dann kooperativ und unkritisch den optimalen Weg fahren zu können.
- In einer alternativen Ausführungsform ist vorgesehen, für alle möglichen Ausgangspfade einer Kreuzung eine Route zu rechnen und dem Fahrer für diese Alternativen Zeit- und Entfernungsinförmationen bereitzustellen.

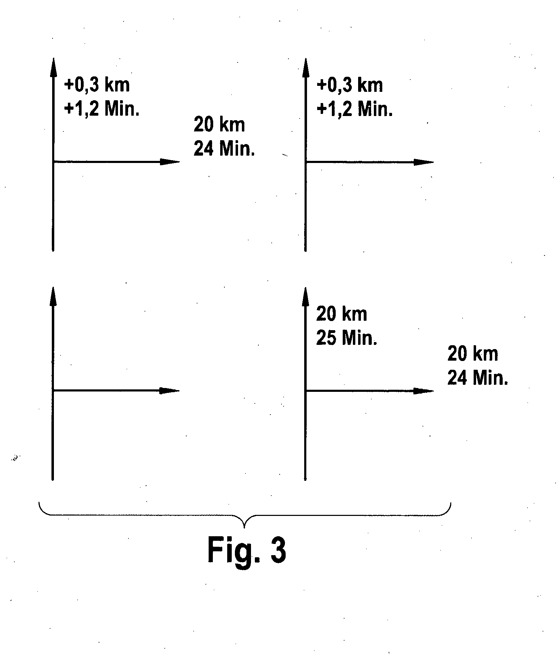

Um den Fahrer übersichtlich über die alternativen Fahrtrouten zu informieren, ist das Fahrzeugnavigationssystem 01 mit Mitteln 08 zur Ausgabe sicherheitsoptimaler Fahrhinweise ausgestattet, beispielsweise mit einer Mensch-Maschine-Schnittstelle (HMI, Human Machine Interface). Vorteilhafterweise verfügen die Mittel 08 zur Ausgabe sicherheitsoptimaler Fahrhinweise über Möglichkeiten zur akustischen und auch visuellen Ausgabe der Fahrhinweise. Für die optische Ausgabe kann eine farbliche Kennzeichnung der unterschiedlichen Strecken vorgesehen sein (vgl. Figur 3) (dunkle Strecken sind zum Beispiel zu bevorzugen, helle sind schlechter, je nach Grauwert sieht der Fahrer dann auf einen Blick, welche Möglichkeiten wirklich diskussionswürdig sind). Alternativ könnte man auch mit Farben, Strichdicken, durchgezogener/gestrichelter Darstellung etc. arbeiten. Akustisch könnte man analog mit Lautstärke oder Reihenfolge der Anweisung arbeiten.

Die vorstehend beschriebenen turn-by-turn-Darstellungen können jedoch analog auf 2D-oder 3D-Darstellungen übertragen werden, das heißt, es kann eine Darstellung in einem beliebigen Maßstab der 2- oder 3-dimensionalen Karte verwendet werden. Das hat in bestimmten Situationen den Vorteil, dass der Fahrzeugführer eine größere Übersicht über den unterschiedlichen Streckenverlauf erhält. (zum Beispiel SD-Darstellungen der Piktogramme mit Route oder im Videobild/Foto.)

Bei allen diesen Szenarien ist es neben der entsprechenden Sensorik 02 wichtig, zum Beispiel die Anzahl der Fahrspuren 06 und die Abbiegemöglichkeiten auf den einzelnen Fahrspuren 06 zu kennen, so dass bei Ausführung des erfindungsgemäßen Verfahrens auf entsprechendes Kartenmaterial zugegriffen wird.

Die für Fahrzeugnavigationssysteme 01 vorstehend angeführten Gesichtspunkte gelten im Wesentlichen auch für Navigationssysteme, die von Radfahrern, Inlineskatern, anderen Freizeitsportlern oder anderen sich mit geringerer Geschwindigkeit bewegenden Nutzern verwendet werden. Derartige Navigationssysteme sind dann in der Regel auf mobilen Endgeräten, wie beispielsweise Personal Digital Assistents (PDA), elektronischen Reiseführern oder Mobiltelefonen, installiert. Andererseits erweist es sich als vorteilhaft, einige spezielle, oben näher beschriebene Risikoarten (vgl. auch Fig. 4), die bei dieser Nutzergruppe auftreten, in den verschiedenen Ausführungsformen zu berücksichtigen.

Die Erfindung beschränkt sich in ihrer Ausführungsform nicht auf das vorstehend angegebene bevorzugte Ausführungsbeispiel. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

## Patentansprüche

1. Zielführungsverfahren, wobei basierend auf Angaben über Ziel und Ausgangsort durch ein Navigationssystem mindestens eine Route berechnet wird, wobei Fahrempfehlungen in Abhängigkeit des Risikos berechneter Routen ausgegeben werden, **dadurch gekennzeichnet, dass** Routen hinsichtlich eines dynamischen Risikos bewertet werden, wobei die dynamischen Risiken hochdynamische Risiken sind, die kurzfristig in eine Routenberechnung derart einfließen, dass Informationen über die aktuelle Verkehrssituation in der Umgebung eines Nutzers des Zielführungsverfahrens ausgewertet werden, dass das Risiko des sich aus berechneten Routen ergebenden Bewegungsverhaltens unter Verwendung der Ergebnisse der Auswertung durch mindestens ein Computerprogramm bewertet wird und Fahrempfehlungen in Abhängigkeit der Bewertung ausgegeben werden, um risikovolle Fahrmanöver zu vermeiden.

2. Zielführungsverfahren nach Anspruch 1, **dadurch gekennzeichnet, dass** Routen hinsichtlich eines statischen und des dynamischen Risikos bewertet werden.

3. Zielführungsverfahren nach Anspruch 2, **dadurch gekennzeichnet, dass** die statischen Risiken bereits bei einer initialen Routenberechnung berücksichtigt werden.

4. Zielführungsverfahren nach einem der voranstehenden Ansprüche, **dadurch gekennzeichnet, dass** Risiken bei der Bewertung einer Route in Abhängigkeit eines Nutzers des Zielführungsverfahrens berücksichtigt werden.

5. Zielführungsverfahren nach einem der voranstehenden Ansprüche, **dadurch gekennzeichnet, dass** das Computerprogramm mindestens eine Schnittstelle zu einem Navigationssystem aufweist oder dass das Computerprogramm in ein Navigationssystem integriert ist, und Fahrempfehlungen durch das Navigationssystem in Abhängigkeit der Risikobewertung ausgegeben werden.

6. Zielführungsverfahren nach einem der voranstehenden Ansprüche, **dadurch gekennzeichnet, dass** die Berechnung von Routen eine Bewertung der Routen hinsichtlich der für das Zurücklegen der Route benötigten Zeit und der Routenlänge umfasst, das aus den Routen resultierende Bewegungsverhalten hinsichtlich des Risikos und der Zeit- und/oder Routenlängendifferenz gegenüber alternativen Routen bewertet werden.

7. Zielführungsverfahren nach einem der voranstehenden Ansprüche, **dadurch gekennzeichnet, dass** in Abhängigkeit der Bewertung von Risiken des Bewegungsverhaltens der Zeitpunkt der Ausgabe von Fahrempfehlungen bestimmt wird.

8. Zielführungsverfahren nach Anspruch 7, **dadurch gekennzeichnet, dass** bei hohem Risiko des Bewegungsverhaltens die Ausgabe von Fahrempfehlungen für eine zeit- und/oder entfernungsoptimale Route früher erfolgt, als bei einem niedrigen Risiko.

9. Zielführungsverfahren nach einem der voranstehenden Ansprüche, **dadurch gekennzeichnet, dass** bei hohem Risiko des Bewegungsverhaltens für eine optimale Route die Ausgabe von Fahrempfehlungen für eine hinsichtlich Zeit und Routenlänge suboptimale Route erfolgt.

10. Zielführungsverfahren nach einem der voranstehenden Ansprüche, **dadurch gekennzeichnet, dass** Fahrempfehlungen für mehrere alternative Routen ausgegeben werden.

11. Zielführungsverfahren nach Anspruch 10, **dadurch gekennzeichnet, dass** die Reihenfolge der Ausgabe der Fahrempfehlungen durch die Bewertung der jeweiligen Route bestimmt wird.

12. Zielführungsverfahren nach Anspruch 10 oder 11, **dadurch gekennzeichnet, dass** zusätzlich Informationen über Zeit und/oder Länge von Routen ausgegeben werden.

13. Zielführungsverfahren nach einem der voranstehenden Ansprüche, **dadurch gekennzeichnet, dass** im Falle der Nutzung des Zielführungsverfahrens durch einen Fahrzeugführer Fahrtrouten durch automatische Abstimmung mit benachbarten Fahrzeugen bestimmt werden.

14. Zielführungsverfahren nach einem der voranstehenden Ansprüche, **dadurch gekennzeichnet, dass** bei visueller Ausgabe von Fahrempfehlungen die Fahrempfehlungen in Abhängigkeit der Bewertung in unterschiedlichen Farben oder Grauwerten und/oder unterschiedlichen Helligkeitsstufen ausgegeben werden.

15. Zielführungsverfahren nach einem der voranstehenden Ansprüche, **dadurch gekennzeichnet, dass** Informationen über die aktuelle Verkehrssituation über Radar-,
- Video-,
- biometrische
- Fahrzeugumfeld-
- Fahrzeug-zu-Fahrzeug- (Car2Car-),
- Fahrzeug-Umgebungs-Sensoren (Car2lnfrastructure-Sensoren),
- ein TMC-System (TMC = Traffic Message Channel),
- eine Verkehrszentrale und/oder
- eine Verkehrsleiteinrichtung
gewonnen werden.

16. Zielführungsverfahren nach einem der voranstehenden Ansprüche,
**dadurch gekennzeichnet, dass**
die Risikobewertung
- für das Befolgen der jeweiligen Route erforderliche Abbiegevorgänge und/oder
- für das Befolgen der jeweiligen Route erforderliche Spurwechsel vorgenommen wird und/oder die Risikobewertung
- die Verkehrsdichte in der Umgebung eines Fahrzeugs (03),
- die Geschwindigkeit des Fahrzeugs (03) und/oder
- alternative Routen
berücksichtigt.

17. Anordnung mit mindestens einem Chip und/oder Prozessor, der (die) derart eingerichtet ist (sind), dass ein Zielführungsverfahren ausführbar ist, wobei Fahrempfehlungen in Abhängigkeit des Risikos berechneter Routen ausgegeben werden, **dadurch gekennzeichnet, dass** Routen hinsichtlich eines dynamischen Risikos bewertet werden, wobei die dynamischen Risiken hochdynamische Risiken sind, die kurzfristig in eine Routenberechnung derart einfließen, dass Informationen über die aktuelle Verkehrssituation in der Umgebung eines Nutzers des Zielführungsverfahrens ausgewertet werden, dass das Risiko des sich aus berechneten Routen ergebenden Bewegungsverhaltens unter Verwendung der Ergebnisse der Auswertung durch mindestens ein Computerprogramm bewertet wird und Fahrempfehlungen in Abhängigkeit der Bewertung ausgegeben werden, um risikovolle Fahrmanöver zu vermeiden.

18. Anordnung nach Anspruch 17,
**dadurch gekennzeichnet, dass**
die Anordnung ein Navigationssystem umfasst.

19. Anordnung nach Anspruch 17 oder 18,
**dadurch gekennzeichnet, dass**
die Anordnung mindestens einen
- Radar-,
- Video-,
- biometrische
- Fahrzeugumfeld-
- Fahrzeug-zu-Fahrzeug- (Car2Car-) und/oder
- Fahrzeug-Umgebungs-Sensor (Car2lnfrastructure-Sensor),
umfasst.

20. Computerprogramm, das es einer Datenverarbeitungseinrichtung ermöglicht, nachdem es in den Speicher der Datenverarbeitungseinrichtung geladen worden ist, ein Zielführungsverfahren durchzuführen, wobei Fahrempfehlungen in Abhängigkeit des Risikos berechneter Routen ausgegeben werden, wobei Routen hinsichtlich eines dynamischen Risikos bewertet werden, wobei die dynamischen Risiken hochdynamische Risiken sind, die kurzfristig in eine Routenberechnung derart einfließen, dass
Informationen über die aktuelle Verkehrssituation in der Umgebung eines Nutzers des Zielführungsverfahrens ausgewertet werden, dass das Risiko des sich aus berechneten Routen ergebenden Bewegungsverhaltens unter Verwendung der Ergebnisse der Auswertung durch mindestens ein Computerprogramm bewertet wird und Fahrempfehlungen in Abhängigkeit der Bewertung ausgegeben werden, um risikovolle Fahrmanöver zu vermeiden.

21. Computerlesbares Speichermedium, auf dem ein Programm gespeichert ist, das es einer Datenverarbeitungseinrichtung ermöglicht, nachdem es in den Speicher der Datenverarbeitungseinrichtung geladen worden ist, ein Zielführungsverfahren durchzuführen, wobei Fahrempfehlungen in Abhängigkeit des Risikos berechneter Routen ausgegeben werden, wobei Routen hinsichtlich eines dynamischen Risikos bewertet werden, wobei die dynamische Risiken hochdynamische Risiken sind, die kurzfristig in eine Routenberechnung derart einfließen, dass Informationen über die aktuelle Verkehrssituation in der Umgebung eines Nutzers des Zielführungsverfahrens ausgewertet werden, dass das Risiko des sich aus berechneten Routen ergebenden Bewegungsverhaltens unter Verwendung der Ergebnisse der Auswertung durch mindestens ein Computerprogramm bewertet wird und Fahrempfehlungen in Abhängigkeit der Bewertung ausgegeben werden, um risikovolle Fahrmanöver zu vermeiden.

22. Verfahren, bei dem ein Computerprogramm nach Anspruch 20 aus einem elektronischen Datennetz, wie beispielsweise aus dem Internet, auf eine an das Datennetz angeschlossene Datenverarbeitungseinrichtung heruntergeladen wird.

## Claims

1. Routing method, wherein a navigation system takes details about destination and starting location as a basis for computing at least one route, wherein driving recommendations are output on the basis of the risk of computed routes, **characterized in that** routes are rated in terms of a dynamic risk, wherein the dynamic risks are highly dynamic risks that briefly influence route computation such that information about the current traffic situation in the surroundings of a user of the routing method is evaluated, **in that** the risk of the movement behaviour that results from computed routes is rated by at least one computer program using the results of the evaluation and driving recommendations are output on the basis of the rating in order to avoid risky driving manoeuvres.

2. Routing method according to Claim 1, **characterized in that** routes are rated in terms of a static risk and the dynamic risk.

3. Routing method according to Claim 2, **characterized in that** the static risks are already considered during an initial route computation.

4. Routing method according to one of the preceding claims, **characterized in that** risks are considered on the basis of a user of the routing method when rating a route.

5. Routing method according to one of the preceding claims, **characterized in that** the computer program has at least one interface to a navigation system or **in that** the computer program is integrated in a navigation system, and driving recommendations are output by the navigation system on the basis of the risk rating.

6. Routing method according to one of the preceding claims, **characterized in that** the computation of routes comprises rating of the routes in terms of the time required for covering the route and the route length, and the movement behaviour that results from the routes is rated in terms of the risk and the time difference and/or route length difference in comparison with alternative routes.

7. Routing method according to one of the preceding claims, **characterized in that** the rating of risks of the movement behaviour is taken as a basis for determining the time of output of driving recommendations.

8. Routing method according to Claim 7, **characterized in that** high risk in the movement behaviour prompts the output of driving recommendations for a route that is optimum in terms of time and/or distance to take place earlier than in the case of a low risk.

9. Routing method according to one of the preceding claims, **characterized in that** high risk in the movement behaviour for an optimum route prompts the output of driving recommendations for a route that is less than optimum in terms of time and route length.

10. Routing method according to one of the preceding claims, **characterized in that** driving recommendations are output for a plurality of alternative routes.

11. Routing method according to Claim 10, **characterized in that** the order of output of the driving recommendations is determined by the rating of the respective route.

12. Routing method according to Claim 10 or 11, **characterized in that** additionally information about the time and/or length of routes is output.

13. Routing method according to one of the preceding claims, **characterized in that** if the routing method is used by a vehicle driver then journey routes are determined by means of automatic coordination with adjacent vehicles.

14. Routing method according to one of the preceding claims, **characterized in that** visual output of driving recommendations prompts the driving recommendations to be output in different colours or greyscale values and/or different brightness levels on the basis of the rating.

15. Routing method according to one of the preceding claims, **characterized in that** information about the current traffic situation is obtained by means of radar,
- video,
- biometric,
- vehicle environment,
- vehicle-to-vehicle (car2car) or
- vehicle surroundings sensors (car2infrastructure sensors),
- a TMC system (TMC = traffic message channel),
- a traffic control centre and/or
- a traffic control device.

16. Routing method according to one of the preceding claims,
**characterized in that**
the rating of risk is performed
- for turn-off manoeuvres that are required in order to follow the respective route and/or
- for lane changes that are required in order to follow the respective route and/or the risk rating considers
- the density of traffic in the surroundings of a vehicle (03),
- the speed of the vehicle (03) and/or
- alternative routes.

17. Arrangement having at least one chip and/or processor that is (are) set up such that a routing method can be carried out, wherein driving recommendations are output on the basis of the risk of computed routes, **characterized in that** routes are rated in terms of a dynamic risk, wherein the dynamic risks are highly dynamic risks that briefly influence route computation such that information about the current traffic situation in the surroundings of a user of the routing method is evaluated, **in that** the risk of the movement behaviour that results from computed routes is rated by at least one computer program using the results of the evaluation and driving recommendations are output on the basis of the rating in order to avoid risky driving manoeuvres.

18. Arrangement according to Claim 17,
**characterized in that**
the arrangement comprises a navigation system.

19. Arrangement according to Claim 17 or 18,
**characterized in that**
the arrangement comprises at least one
- radar,
- video,
- biometric,
- vehicle environment,
- vehicle-to-vehicle (car2car) and/or
- vehicle surroundings sensor (car2infrastructure sensor).

20. Computer program that, after it has been loaded into the memory of a data processing device, allows the data processing device to perform a routing method, wherein driving recommendations are output on the basis of the risk of computed routes, wherein routes are rated in terms of a dynamic risk, wherein the dynamic risks are highly dynamic risks that briefly influence route computation such that information about the current traffic situation in the surroundings of a user of the routing method is evaluated, and that the risk of the movement behaviour that results from computed routes is rated by at least one computer program using the results of the evaluation and driving recommendations are output on the basis of the rating in order to avoid risky driving manoeuvres.

21. Computer-readable storage medium that stores a program that, after it has been loaded into the memory of a data processing device, allows the data processing device to perform a routing method, wherein driving recommendations are output on the basis of the risk of computed routes, wherein routes are rated in terms of a dynamic risk, wherein the dynamic risks are highly dynamic risks that briefly influence route computation such that information about the current traffic situation in the surroundings of a user of the routing method is evaluated, and that the risk of the movement behaviour that results from computed routes is rated by at least one computer program using the results of the evaluation and driving recommendations are output on the basis of the rating in order to avoid risky driving manoeuvres.

22. Method in which a computer program according to Claim 20 is downloaded from an electronic data network, such as from the Internet, onto a data processing device that is connected to the data network.

## Revendications

1. Procédé de guidage vers une destination, au moins un itinéraire étant calculé par un système de navigation en se basant sur des indications sur la destination et l'emplacement initial, des recommandations de conduite étant délivrées en fonction du risque des itinéraires calculés, **caractérisé en ce que** les itinéraires sont évalués du point de vue d'un risque dynamique, les risques dynamiques étant des risques hautement dynamiques qui interviennent à court terme dans le calcul d'un itinéraire de telle sorte que des informations sur la situation de trafic actuelle dans l'environnement d'un utilisateur du procédé de guidage vers une destination sont interprétées, que le risque du régime de déplacement résultant des itinéraires calculés est évalué par au moins un programme informatique en utilisant les résultats de l'interprétation et des recommandations de conduite sont délivrées en fonction de l'évaluation afin d'éviter les manoeuvres de conduite risquées.

2. Procédé de guidage vers une destination selon la revendication 1, **caractérisé en ce que** les itinéraires sont évaluée du point de vue d'un risque statique et du risque dynamique.

3. Procédé de guidage vers une destination selon la revendication 2, **caractérisé en ce que** les risques statiques sont déjà pris en considération lors d'un calcul initial de l'itinéraire.

4. Procédé de guidage vers une destination selon l'une des revendications précédentes, **caractérisé en ce que** les risques sont pris en considération lors de l'évaluation d'un itinéraire en fonction d'un utilisateur du procédé de guidage vers une destination.

5. Procédé de guidage vers une destination selon l'une des revendications précédentes, **caractérisé en ce que** le programme informatique possède au moins une interface avec un système de navigation ou **en ce que** le programme informatique est intégré dans un système de navigation, et les recommandations de conduite sont délivrées par le système de navigation en fonction de l'évaluation du risque.

6. Procédé de guidage vers une destination selon l'une des revendications précédentes, **caractérisé en ce que** le calcul des itinéraires comprend une évaluation des itinéraires du point de vue du temps nécessaire pour parcourir l'itinéraire et de la longueur de l'itinéraire, le régime de déplacement résultant des itinéraires étant évalué du point de vue du risque et de la différence de temps et/ou de longueur d'itinéraire par rapport à es itinéraires alternatifs.

7. Procédé de guidage vers une destination selon l'une des revendications précédentes, **caractérisé en ce que** l'instant de délivrance des recommandations de conduite est défini en fonction de l'évaluation des risques du régime de déplacement.

8. Procédé de guidage vers une destination selon la revendication 7, **caractérisé en ce qu'**en présence d'un risque élevé du régime de déplacement, la délivrance des recommandations de conduite pour un itinéraire au temps et/ou à la distance optimal a lieu plus tôt que dans le cas d'un risque faible.

9. Procédé de guidage vers une destination selon l'une des revendications précédentes, **caractérisé en ce qu'**en présence d'un risque élevé du régime de déplacement pour un itinéraire optimal, la délivrance des recommandations de conduite est effectuée pour un itinéraire au temps et/ou à la distance sub-optimal.

10. Procédé de guidage vers une destination selon l'une des revendications précédentes, **caractérisé en ce que** des recommandations de conduite sont délivrées pour plusieurs itinéraires alternatifs.

11. Procédé de guidage vers une destination selon la revendication 10, **caractérisé en ce que** l'ordre de délivrance des recommandations de conduite est déterminé par l'évaluation de l'itinéraire correspondant.

12. Procédé de guidage vers une destination selon la revendication 10, **caractérisé en ce que** des informations sur le temps et/ou la longueur des itinéraires sont délivrées en plus.

13. Procédé de guidage vers une destination selon l'une des revendications précédentes, **caractérisé en ce qu'**en cas d'utilisation du procédé de guidage vers une destination par un conducteur de véhicule, les itinéraires de conduite sont déterminés par concertation automatique avec les véhicules voisins.

14. Procédé de guidage vers une destination selon l'une des revendications précédentes, **caractérisé en ce que** lors de la délivrance visuelle des recommandations de conduite, les recommandations de conduite sont délivrées dans des couleurs ou des niveaux de gris différents et/ou des niveaux de luminosité différents.

15. Procédé de guidage vers une destination selon l'une des revendications précédentes, **caractérisé en ce que** des informations sur la situation de trafic actuelle sont obtenues par
* des capteurs radar,
* des capteurs vidéo,
* des capteurs biométriques,
* des capteurs de l'environnement du véhicule,
* des capteurs de véhicule à véhicule (Car2Car),
* des capteurs de l'entourage du véhicule (Car2Infrastructure),
* un système TMC (Canal de message de trafic),
* une centrale de régulation du trafic et/ou
* un dispositif de contrôle du trafic.

16. Procédé de guidage vers une destination selon l'une des revendications précédentes, **caractérisé en ce que**
l'évaluation du risque est effectuée
* pour les manoeuvres de changement de direction nécessaires pour le suivi de l'itinéraire correspondant et/ou
* pour le changement de voie nécessaire pour le suivi de l'itinéraire correspondant et/ou l'évaluation du risque prend en considération
* la densité du trafic dans l'entourage d'un véhicule (03),
* la vitesse du véhicule (03) et/ou
* les itinéraires alternatifs.

17. Arrangement comprenant au moins une puce et/ou un processeur qui et (sont) conçu (s) de telle sorte qu'il est possible de mettre en oeuvre un procédé de guidage vers une destination, des recommandations de conduite étant délivrées en fonction du risque des itinéraires calculés, **caractérisé en ce que** les itinéraires sont évalués du point de vue d'un risque dynamique, les risques dynamiques étant des risques hautement dynamiques qui interviennent à court terme dans le calcul d'un itinéraire de telle sorte que des informations sur la situation de trafic actuelle dans l'environnement d'un utilisateur du procédé de guidage vers une destination sont interprétées, que le risque du régime de déplacement résultant des itinéraires calculés est évalué par au moins un programme informatique en utilisant les résultats de l'interprétation et des recommandations de conduite sont délivrées en fonction de l'évaluation afin d'éviter les manoeuvres de conduite risquées.

18. Arrangement selon la revendication 17, **caractérisé en ce que** l'arrangement comprend un système de navigation.

19. Arrangement selon la revendication 17 ou 18, **caractérisé en ce que** l'arrangement comprend au moins un
* capteur radar,
* capteur vidéo,
* capteur biométrique,
* capteur de l'environnement du véhicule,
* capteur de véhicule à véhicule (Car2Car) et/ou
* capteur de l'entourage du véhicule (Car2Infrastructure).

20. Programme informatique qui permet à un dispositif de traitement de données, après qu'il ait été chargé dans la mémoire du dispositif de traitement de données, de mettre en oeuvre un procédé de guidage vers une destination, des recommandations de conduite étant délivrées en fonction du risque des itinéraires calculés, les itinéraires étant évalués du point de vue d'un risque dynamique, les risques dynamiques étant des risques hautement dynamiques qui interviennent à court terme dans le calcul d'un itinéraire de telle sorte que des informations sur la situation de trafic actuelle dans l'environnement d'un utilisateur du procédé de guidage vers une destination sont interprétées, que le risque du régime de déplacement résultant des itinéraires calculés est évalué par au moins un programme informatique en utilisant les résultats de l'interprétation et des recommandations de conduite sont délivrées en fonction de l'évaluation afin d'éviter les manoeuvres de conduite risquées.

21. Support de mémorisation lisible par ordinateur, sur lequel est enregistré un programme qui permet à un dispositif de traitement de données, après qu'il ait été chargé dans la mémoire du dispositif de traitement de données, de mettre en oeuvre un procédé de guidage vers une destination, des recommandations de conduite étant délivrées en fonction du risque des itinéraires calculés, les itinéraires étant évalués du point de vue d'un risque dynamique, les risques dynamiques étant des risques hautement dynamiques qui interviennent à court terme dans le calcul d'un itinéraire de telle sorte que des informations sur la situation de trafic actuelle dans l'environnement d'un utilisateur du procédé de guidage vers une destination sont interprétées, que le risque du régime de déplacement résultant des itinéraires calculés est évalué par au moins un programme informatique en utilisant les résultats de l'interprétation et des recommandations de conduite sont délivrées en fonction de l'évaluation afin d'éviter les manoeuvres de conduite risquées.

22. Procédé, selon lequel un programme informatique selon la revendication 20 est téléchargé depuis un réseau de données électronique, comme par exemple l'Internet, sur un dispositif de traitement de données connecté au réseau de données.
